# EUROPEAN PATENT SPECIFICATION

(11) **EP 1 858 803 B1**
(45) Date of publication and mention of the grant of the patent: **06.07.2016**
(21) Application number: 06710075.0
(22) Date of filing: 14.03.2006
(51) Int. Cl.: C01B 3/38, C01B 3/48, C01B 3/50, C01B 3/56, F25J 3/02, F25J 3/06

(54) **A PROCESS FOR THE PRODUCTION OF HYDROGEN WITH CO-PRODUCTION AND CAPTURE OF CARBON DIOXIDE**
VERFAHREN ZUR HERSTELLUNG VON WASSERSTOFF UNTER GLEICHZEITIGER HERSTELLUNG UND ABFANGUNG VON KOHLENDIOXID
PROCEDE DE PRODUCTION D'HYDROGENE AVEC COPRODUCTION ET CAPTURE DE DIOXYDE DE CARBONE

(30) Priority: 14.03.2005 GB 0505164; 15.11.2005 GB 0523219
(43) Date of publication of application: 28.11.2007
(73) Proprietor: Weedon, Geoffrey Gerald, Maraval, Trinidad & Tobago, West Indies (IN); Torgersen, Bjarne, 8160 Glomfjord (NO)
(72) Inventor: Weedon, Geoffrey Gerald, Maraval, Trinidad & Tobago, West Indies (IN); Torgersen, Bjarne, 8160 Glomfjord (NO)
(74) Representative: Johnson, Yvonne Catherine
(86) International application number: PCT/GB2006/000894
(87) International publication number: WO 2006/097703

(56) References cited:
- EP-A- 0 341 879
- WO-A-00/27505
- WO-A-00/30973
- WO-A-99/35455
- WO-A-02/068084

## Description

The present invention relates to processes for the production of hydrogen with the co-production and capture of carbon dioxide by steam methane reforming of a hydrocarbon feedstock.

Hydrogen is required for various purposes, including potentially as a fuel in power generation plants, but does not exist in the environment as a raw material. Accordingly, processes have been derived for producing hydrogen from other raw materials. One such process is the production of hydrogen from natural gas. Compared with other fossil fuels, natural gas is a cost-effective feed for making hydrogen, in part because it is widely available and is easy to handle.

The majority of hydrogen produced from natural gas today is via the steam methane reforming process, which essentially involves steam and natural gas being passed at high temperature (e.g. 700 - 1000°C) over a catalyst to produce a gas stream, of which a large part is hydrogen. The endothermic heat of reaction is traditionally supplied by combustion of a suitable fuel such as natural gas or off-gases from hydrogen separation processes at, or about, atmospheric pressure.

In particular, hydrogen production via steam methane reforming may involve four steps. Firstly, the natural gas is usually pre-treated to remove sulphur compounds by adsorption and reaction with zinc oxide, together with catalytic hydrogenation when necessary. Secondly, the reforming step is carried out by mixing the natural gas with steam and passing it over a catalyst, such as a nickel-on-alumina catalyst, at high temperature, to produce mostly carbon monoxide and hydrogen. Thirdly, a water-gas shift reaction is suitably carried out to react most of the carbon monoxide with steam to produce hydrogen and carbon dioxide.

For example, carbon monoxide and excess steam may be passed over a catalyst such as iron oxide / chrome oxide (HT Shift) at elevated temperature, such as 300 - 400°C, for example about 380°C, followed by a catalyst such as copper / zinc oxide (LT Shift) at a reduced temperature, such as 200 - 300°C, for example about 230°C. Finally, the hydrogen gas is separated from the other constituents of the synthesis gas. In the first instance, excess steam is removed by condensation, for heat recovery. Often the CO₂ may be removed via liquid absorption in amine solutions, for example, to produce a raw hydrogen product stream. Optionally, a pure hydrogen product stream may be produced by feeding the cooled exit stream from the water-gas shift unit to a pressure swing adsorption (PSA) unit.

Natural gas is of course primarily methane but usually comprises other hydrocarbons. The steam methane reforming technique is not limited to the use of methane as feedstock; it may be used to produce hydrogen from any hydrocarbon or combination of hydrocarbons. In particular the feedstock may be one or more liquid hydrocarbon, or it may be partially reformed or vaporised gas mixtures produced from coal, wood or oil, for example.

In order to address the issue of global warming and the perceived contribution of carbon dioxide emissions to this, when considering the use of natural gas or other hydrocarbon feedstocks to produce hydrogen, the capture of carbon dioxide needs consideration.

It is known that the gaseous exhaust stream from the production of electricity from natural gas or other hydrocarbon feedstocks can be decarbonised by passing it through a solvent to capture carbon dioxide. However, this route incurs significant cost and energy penalties and there is a need to dispose of degradation / by-products from the solvent.

An alternative approach to carbon dioxide capture is pre-combustion decarbonisation, where natural gas is converted to hydrogen, with the carbon dioxide being removed as an integral part of the hydrogen production process. The hydrogen is then combusted in a power plant to produce water vapour.

The invention described herein concerns a cost-effective process for the production of hydrogen, from natural gas or other suitable hydrocarbon feedstocks, with the co-production and capture of carbon dioxide, in particular liquid carbon dioxide, in a single hydrogen production plant. The hydrogen thus obtained can subsequently be exported as a pure product or be combusted in electrical power production plants.

This aspect of the invention, the possibility to co-produce a pure hydrogen product for use as a transportation fuel, for example, whilst producing a hydrogen fuel stream for electrical power production is a desirable feature and an important aspect of the technology. It allows variable production of either stream, from 0 - 100% at any time. Thus power production could be favoured during times of high demand, whilst during off-peak periods during the day, or in summer months, production could be switched to pure hydrogen production. Production could be varied over time, thus hydrogen would be available for transportation use without the need to build in over-capacity prior to the build-up of demand.

The present invention relates to a process for the production of hydrogen with the co-production and capture of carbon dioxide, wherein the process comprises steam methane reforming a hydrocarbon feedstock in the presence of a fuel and a combustion sustaining medium using (i) a steam methane reformer unit that comprises a steam methane reformer (SMR), and (ii) a water gas shift unit, so as to result in the production of a reformed gas stream comprising hydrogen and carbon dioxide, and a combustion products stream, wherein the process comprises the steps of:
(a) separating and removing most or all of the hydrogen from the reformed gas stream; and then
(b) recovering most or all of the carbon dioxide as a separate by-product stream by condensation of liquid carbon dioxide from the gas stream; and then
(c) recycling the remaining gases from the gas stream by mixing these gases with the SMR feed stream;
wherein the fuel is principally hydrogen and greater than 85% of the carbon contained in the feed stream to the process is recovered and exported as carbon dioxide. Further embodiments of the invention are disclosed in claims 2 to 25.

In known steam methane reforming processes, carbonaceous material may be used as fuel; for example natural gas may be used (and therefore the fuel may be the same as the feedstock).

Accordingly, in prior art processes typically 30% of the natural gas feed to a synthesis gas generating plant may be consumed as fuel in the SMR. Accordingly, the carbon recovery via the recovered carbon dioxide will commonly be no more than about 70% of the carbon contained in the overall feed stream to the SMR.

In the present invention, the fuel consumed in the SMR is principally hydrogen. The carbon dioxide produced in the process is captured in order to prevent emission to the atmosphere, with greater than 85% of the carbon contained in the feed stream to the SMR being recovered and exported as carbon dioxide.

The pure carbon dioxide thus produced and captured can be readily transported to desired locations. For example, the carbon dioxide can be conveniently transported to locations where it can be injected to suitable underground structures for storage (sequestration), or to oilfields for Enhanced Oil Recovery (EOR), or to be used in manufacturing processes.

An overall process carbon recovery efficiency of 95% to 100%, in particular 98% to 100%, is readily achievable.

In one embodiment, greater than 90%, such as greater than 95%, for example greater than 98%, such as 99% or more, of the carbon contained in the feed stream to the process is recovered and exported as carbon dioxide. For example, greater than 99% of the carbon contained in the feed stream to the process may be recovered and exported as carbon dioxide, with the feedstock comprising less than 0.5 mol% in total of nitrogen, argon, and other inert gases.

By way of example, using the process described herein, when producing a pure hydrogen product, an energy consumption of 1.56 x 10⁴ kJ/m³ (420 Btu/SCF) can be achieved. This is for production of > 99.9 mol% pure hydrogen at over 1480kPa (200 psgi), plus export of pure CO₂ at a pressure of 13900kPa (2 000 psgi), with a carbon capture efficiency of 99%. It assumes electrical energy import at 45% energy efficiency.

Efficiency figures for hydrogen production using conventional SMR without CO₂ capture are typically in the range 1.23 -1.42 x 10⁴ kJ/m³ (330 - 380 Btu/SCF).

The steam methane reformer unit suitably comprises one or more of the following: (a) apparatus for desulphurising the feedstock, (b) a feedstock saturator circuit suitable for admixing steam to natural gas, (c) a feedstock pre-reformer, (d) a means for removal of excess oxygen from combustion products, and (e) one or more heat exchangers suitable for transferring heat. Preferably, the steam methane reformer unit comprises one or more of (a), (b), (c), and (e). In one embodiment, the steam methane reformer unit comprises (a), (b), (c), and (e); and may further comprise (d).

Preferably, the steam methane reformer (SMR) comprises a number of tubes through which the heat for the endothermic reforming reaction is transferred principally by means of convection. More preferably, the SMR is a fired convective reformer, most preferably a fired convective reformer in accordance with that described in PCT Patent Publication WO 01/64327.

The SMR may comprise one or more heat recovery coils.

The steam methane reformer unit and the water gas shift unit may be separate pieces of apparatus or there may be a single piece of apparatus that comprises both the steam methane reformer unit and the water gas shift unit.

In a preferred embodiment, the combustion of the fuel in the SMR is carried out in a substantially reducing atmosphere, such as an atmosphere with a stoichiometric excess of hydrogen, such that substantially all of the oxygen present is consumed, and the combustion products stream contains a stoichiometric excess of reducing gas, such as hydrogen. The production of nitrogen oxides (NOx) is thus severely reduced or effectively eliminated.

In the present invention, the fuel for combustion within the SMR is principally hydrogen, that is to say it is greater than 50mol% hydrogen. The fuel for combustion within the SMR may contain 60mol% or more hydrogen, such as 70mol % or more hydrogen, preferably 80mol% or more hydrogen, for example 85mol% or more hydrogen, such as 90mol% or more hydrogen. For example, the fuel for combustion within the SMR may contain 95mol% or more hydrogen, e.g. 98mol % or more hydrogen, such as 99mol % or more hydrogen, which results in the combustion products stream containing an excess of hydrogen. When mol% values for hydrogen are given, this is with reference to measurements on a dry basis, i.e. excluding any water vapour that may be present in the fuel.

In one embodiment, the fuel may comprise water vapour. For example, water vapour may suitably be added to the fuel stream in order to prevent carbon deposition via thermal cracking of any carbonaceous material present in the fuel stream at high temperature, or as a diluent to reduce the peak combustion temperature.

The fuel may comprise water vapour at a level of 30mol% or less, preferably 20mol% or less, more preferably 15mol% or less, most preferably 10mol% or less, for example 5mol% or less, such as 4mol% or less, e.g. 3mol% or less, 2mol% or less, or 1 mol% or less. When mol% values for water vapour are given, clearly this is with reference to measurements on a wet basis.

In the present invention, the combustion sustaining medium may be preheated. Any suitable combustion sustaining medium may be used; for example it may be air, or oxygen, or oxygen enriched air, or a mixture consisting essentially of oxygen and water vapour.

The combustion sustaining medium, for example air, may be saturated with water vapour or mixed with other diluents prior to combustion to moderate the peak combustion temperature

In one embodiment of the process according to the present invention, combustion of the fuel in the steam methane reformer (SMR) is preferably carried out at a pressure sufficiently high that the combustion products stream may, if desired, be co-mixed with the hydrogen product stream without further compression.

Combustion of the fuel in the SMR at a pressure higher than atmospheric pressure is preferred. The combustion may suitably be at a pressure of 115kPa (2 psig) or higher, for example 135kPa or higher, such as 150kPa or higher, e.g. 200kPa (14.3psig) or higher. The optimum operating pressure will however be determined by the end use of the hydrogen product.

For example, when product hydrogen is intended to be combusted in an electrical power production plant, such as when the bulk of the product hydrogen is intended to be consumed in a gas turbine (GT) (when the operating pressure is affected by the required pressure at the gas turbine combustor inlet) the combustion may be at a pressure of 115kPa (2 psig) or higher, for example 135kPa or higher, such as 150kPa or higher, e.g. 200kPa (14.3psig) or higher. The pressure may, for example, be 500kPa or higher, preferably from 700kPa to 2500kPa or higher, such as 1000kPa (130psig) or higher; more preferably 1200kPa or higher, for example 1300kPa or higher, such as 1400kPa or higher, e.g. from 1480kPa (200psig) to 2170kPa (300psig) or higher; most preferably 1500Kpa or higher, for example 1750kPa or higher, such as 2000kPa (275psig) or higher, e.g. from 3549kPa (500psig) to 4238kPa (600psig).

Accordingly, steam methane reformers (SMRs) that can achieve high pressure are preferred.

Alternatively, when product hydrogen is intended for the production of a pure hydrogen stream, operation at a lower pressure is preferred. Preferably the pressure should be as low as practically possible. For example, the pressure may be from 115kPa (2psig) to 500kPa, preferably from 125kPa to 300kPa, more preferably from 135kPa to 275kPa, for example from 150kPa to 225kPa, such as from 175kPa to 220kPa, e.g. from 200kPa (14.3psig) to 210kPa.

When product hydrogen is intended for the co-production of pure hydrogen and a hydrogen product stream for an electrical power production plant, for example, the optimum combustion pressure may be at a higher pressure as preferred for the electrical power production plant, or at a lower pressure as preferred for the hydrogen product stream, or an intermediate pressure, depending on local requirements.

An SMR that is well suited to the requirements of this invention is a "Fired Convective Reformer" (FCR), specifically the FCR described in International PCT Patent Publication WO 01/64327 and UK Patent Publication GB 2 359 764 A, respectively, published in September 2001.

The description following assumes the use of such an SMR (the FCR), although other apparatus could be used, such as a gas heated reformer (GHR), where combustion does not occur within the reformer, or indeed any other type of apparatus whereby heat for the endothermic reforming reaction is provided from an source external to the reforming stream.

A disadvantage of conventional reformers is that their large physical size results in a significant heat loss to atmosphere from the extensive hot surface area of the reformer and associated facility, generally estimated to be up to 2% of the reformer heat duty. In contrast, the FCR is estimated to incur a heat loss of less than 5% of a conventional reformer, i.e. less than 0.1% of the heat duty. In terms of overall efficiency, the FCR efficiency is therefore about 2% higher than a conventional reformer based purely on ambient heat loss, regardless of other efficiencies, and accordingly the use of such apparatus as the SMR is preferred.

One of the significant benefits of utilising an FCR as described above is that the need to generate high pressure steam is obviated; all steam for the reforming process may be generated by saturation of the feed gas within the SMR unit using heat recovered from within the FCR. This confers a significant cost benefit to the process, since production, distribution and use of high pressure steam incurs significant capital cost.

Further, one of the benefits of the invention is the fact that the process plant for producing the hydrogen and carbon dioxide can be completely modularised and installed on offshore platforms or barges, thus allowing for the simultaneous production of power and liquid CO₂, which could be sequestrated locally. The FCR is well suited to modularisation and therefore again this is another reason why the use of the FCR as the SMR is preferred.

In order to maximise the hydrogen content of the reformed gas, it is necessary to pass the reformed gas from the SMR over suitable catalysts (as described previously) in order to promote the reversible water-gas "shift" reaction:

CO + H₂O ↔ CO₂ + H₂

The reaction is mildly exothermic, thus the gas stream increases in temperature across the catalyst beds as the reaction proceeds. However, it is desirable to maintain low temperatures to drive the reaction to the right, i.e. to produce more hydrogen and CO₂ and less steam and carbon monoxide.

Often two catalyst beds are employed, using a so-called High Temperature (HT) shift catalyst, where most of the reaction takes place, and a Low Temperature (LT) shift catalyst, where the remaining reaction is effected.

The shift process is aided by the removal of heat, and this can be undertaken within or after the catalyst beds. In the processes described herein, inter-bed cooling is indicated, but this is but one method of heat recovery that may be employed.

In another variant, shift catalyst may be included within the SMR itself.

In order to maximise the overall process efficiency, it is necessary to maximise the heat recovery from the reformed gas and minimise the heat rejected to atmosphere or cooling water prior to the hydrogen separation stage. Much of this heat is contained in the latent heat of the steam (water vapour) remaining in the reformed gas.

In a conventional SMR process for hydrogen production, CO₂ is often removed by absorption from the reformed gas using a liquid solute, such as an amine, for example MEA or DEA, or activated potassium carbonate solution. Most or all of the heat required to regenerate the solution and liberate the CO₂ is supplied from the reformed gas. This large heat requirement, however, precludes the recovery of this heat for other useful purposes.

In the process of this invention, CO₂ recovery takes place after the hydrogen separation stage and does not require heat from the reformed gas stream. Thus more heat is available to be recovered to other streams, thereby increasing the overall process efficiency.

Prior to step (a), heat may be recovered from the reformed gas stream in one or more heat recovery units.

In one embodiment, most or all of the water vapour contained in the reformed gas stream is condensed and recovered in one or more heat recovery units. A significant part of this energy may be imparted to a hydrogen stream derived from the reformed gas stream, via vaporisation of hot water in a saturator; wherein the vaporised water thus produced becomes part of the hydrogen product stream.

Prior to, and / or following, the heat recovery so described, further heat may be recovered from the reformed gas stream in one or more heat recovery units. For example, this heat may be usefully imparted to streams which include feed gas, fuel gas, recycle gas, demineralised water, process condensate, boiler feedwater, boiler circulation water, hot water for domestic purposes, or other streams where low grade heat can be utilised.

With regard to the separation and removal of the hydrogen product from the gas stream, this may suitably be carried out using a hydrogen recovery unit that comprises one or more unit selected from: a pressure swing absorption unit (PSA) and a membrane separation unit (MS).

A unit such as PSA unit is preferred in this regard since the hydrogen product thus produced may be of very high purity (from 99 to 99.999 mol%), thus enabling a high degree of carbon capture in the overall process. In this case the hydrogen product is at high pressure, with the off-gases, comprising mostly CO₂, at low pressure. The hydrogen product thus does not normally require further recompression.

If a PSA unit is used in step (a), the fraction of hydrogen recovered will depend to a great extent on the off-gas pressure; the lower the pressure, the higher the recovery. However, the lower the pressure, the higher is the recompression energy required to compress the off-gas to step (b). The selection of off-gas pressure is thus a compromise, which would be typically from from 115 to 450 kPa (2 to 50 psig), such as from from 136 to 274 kPa (5 to 25 psig), for example from from 170 to 205 kPa (10 to 25 psig.

Alternatively, a combination of PSA and membrane units, or other techniques, may be used to effect the hydrogen separation

The hydrogen gas that is removed in step (a) may be subsequently heated to recover low grade heat energy. In one embodiment, the hydrogen product is reheated and saturated with water vapour, either in, or downstream of, step (a).

In the process described herein, preferably in step (a) 70% or more of the hydrogen product is separated and removed from the reformed gas stream, such as 75% or more, for example 80% or more, preferably 85% or more.

In one embodiment, the hydrogen gas removed in step (a) is split into two streams, one of which is a hydrogen fuel stream for the SMR and one of which is, or forms a part of, an export hydrogen stream. The export hydrogen stream may be exported as a pure hydrogen stream. Alternatively, the export hydrogen stream may be fed to an electrical power production plant, in which case it is suitably further treated and then fed to a gas turbine, or other combustion device.

Preferably, the carbon dioxide is recovered from the recycle gas stream by condensation against a cold fluid, such as a cold refrigerant.

In a variant, the recycle gases may be compressed sufficiently, typically from from 5,617 to 6,998 kPa (800 to 1000 psig) to enable CO₂ condensation against cooling water and thus avoid the need for refrigeration.

Recovery of CO₂ from a gas stream by condensation is known in the art and will therefore be understood by the skilled man. For example, US Patent No. 4639257 teaches the use of a distillation column in series with a CO₂ specific membrane for CO₂ recovery, whereby a part of the carbon dioxide exiting the column overheads is recovered using the membrane and, after being compressed, is recycled to the column feed stream. Thus high overall CO₂ recovery can be achieved.

If less than 100% of the hydrogen is separated and removed in step (a), then hydrogen may suitably be further recovered after step (a) and before recycling the remaining gases in step (c), for example hydrogen may suitably be further recovered downstream of the carbon dioxide recovery step (b).

If less than 100% of the carbon dioxide is recovered in step (b), then carbon dioxide may suitably be further recovered after step (b) and before recycling the remaining gases in step (c).

In the process described herein, carbon dioxide and / or hydrogen may suitably be further recovered downstream of the carbon dioxide recovery step (b) via one or more membranes in series, in particular by using one or more membrane separation units. The permeate hydrogen, or CO₂, or hydrogen / CO₂ mixture stream may be recycled to a point upstream of the CO₂ condensation step (b).

In one embodiment of the process described herein, a mixture of hydrogen and CO₂ is optimally recovered downstream of the carbon dioxide condensation step (b) and recycled to the reformed gas stream upstream of a hydrogen separation unit (a). Depending on the process operating pressures, the recycle may include a gas compression device.

In another embodiment, a stream comprising mostly hydrogen is recovered downstream of the carbon dioxide condensation step (b) and recycled to the reformed gas stream upstream of a hydrogen separation unit (a), whilst a separate stream comprising mostly CO₂ may also be recovered downstream of the carbon dioxide condensation step (b) and recycled to a point between the hydrogen separation step (a) and the CO₂ condensation step (b), such as to a recycle gas compressor suction or between compression stages.

In yet another variation, hydrogen may be advantageously further recovered following compression of the recycle gas via a hydrogen specific membrane at a point upstream of the CO₂ condensation step (b). Hydrogen thus recovered as the permeate stream is preferably recycled to a point upstream of the hydrogen separation unit (a). Alternatively, this stream may be used as a fuel stream to the SMR.

The apparatus used to recover carbon dioxide product as a separate by-product stream by condensation of liquid carbon dioxide from the gas stream preferably comprises a refrigeration unit, which provides refrigerant against which the carbon dioxide can be condensed.

The apparatus may suitably comprise one or more of the following: a chiller to remove most of the water vapour present; a water collection and removal facility; driers to dry the gas; and one or more heat exchangers.

The liquid CO₂ would usually be produced at pressures of typically (2170 - 4238 kPa) (300-600 psig), e.g. (3549 - 4238 kPa) (500-600 psig) by use of the present invention, but this pressure could be readily increased to higher pressures if needed by pumping alone, without the need for expensive additional compression facilities. Lower pressures could be used, but as the pressure is decreased so does the CO₂ condensing temperature; the refrigeration energy requirement and cost thus increase and ultimately become prohibitive.

In the event that the carbon dioxide is required in gaseous form, once the liquid carbon dioxide has been condensed from the gas stream, the liquid carbon dioxide is subsequently vaporised.

The temperature at which the CO₂ will condense is a function of the CO₂ partial pressure at that point, which is itself a function of the concentration of CO₂ and the total pressure.

Increasing the total pressure of the gas recycle stream, and thus the condensing temperature, reduces the refrigeration energy requirements, but increases the recycle gas compression requirements. The selection of the optimum pressure for condensation of the CO₂ is thus a compromise that takes into account energy requirements and capital investment costs.

In one variant, compression of the recycle gas is carried out both before and after the CO₂ condensation step (b) in order to minimise the total compression power requirements.

If desired, once the liquid carbon dioxide has been condensed from the gas stream, a refining step may be used to remove dissolved gases from this liquid carbon dioxide. For example, a fractionation column may be used to remove dissolved gases.

In the process described herein, preferably in step (b) 60% or more of the carbon dioxide from the reformed gas stream is recovered, preferably 70% or more, such as 75% or more, for example 80% or more, preferably 85% or more.

Preferably, greater than 95% of the carbon contained in the feedstock is recovered and exported as carbon dioxide from the process. More preferably, greater than 99% of the carbon contained in the feedstock is recovered and exported as carbon dioxide from the process. In this case it is preferred that the feedstock contains a total of less than 0.5 mol% of inert gases, such as nitrogen and argon.

The process described herein can produce pure hydrogen at a purity of up to 99.999 mol% if desired. The actual purity will depend on the end-user requirements.

In one embodiment, the process comprises mixing the combustion products stream with a substantially pure hydrogen stream, or a stream consisting essentially of hydrogen and water vapour, to produce an export hydrogen product stream from the process. For example, the combustion products stream may be co-mixed with some or all of the hydrogen removed in step (a) to produce an export hydrogen product stream from the process. The export hydrogen product stream may suitably be subsequently fed to a power plant, for example an electrical power generation plant.

The fuel stream that may be subsequently fed to a power plant may essentially comprise a mixture of hydrogen, nitrogen and water vapour (steam). For example, the export hydrogen product stream may comprise hydrogen, steam and nitrogen and up to 10 mol %, preferably up to 5 mol%, more preferably up to 2mol%, most preferably up to lmol%, other components. For example, the export hydrogen product stream may comprise up to 0.5mol%, preferably up to 0.2mol%, carbon dioxide, and may comprise up to 0.7mol%, preferably up to 0.4% argon. The export hydrogen product stream suitably comprises greater than 20 mol % of nitrogen. The export hydrogen product stream also suitably comprises greater than 20 mol % of water vapour.

The fuel stream is optimally at moderately high temperature, for example it may be at a temperature of from 150 to 500°C, for example from 200 to 450°C, such as from 260 to 400°C (about 500 to 750°F), typically from 220 to 300°C.

The hydrogen concentration would be typically from about 20 to 50 mol%, for example from 20 to 40 mol%, such as from 25 to 35 mol% (e.g. 30 or 33mol%), with steam from 15 to 35 mol%, for example from 20 to 40 mol%, such as from 25 to 35 mol% (e.g. 30 or 33 mol%) and nitrogen from 20 to 40 mol%, for example from 25 to 40 mol%, such as from 25 to 35 mol% (e.g. 30 or 33 mol%). The actual concentrations can be varied and will depend on the feedstock composition and on the specifics of the actual plant design, as will the final product temperature.

The advantage of maximising the mass flow and temperature of the fuel product stream is that the power obtained from the gas turbine, as well as the heat recovered from the downstream heat recovery & steam generation (HRSG) system in the power plant is maximised. Thus the overall power generation efficiency is improved.

A hydrogen concentration of about 30 or 33% is also ideal for combustion in conventional gas turbines, without the need for the special modifications that would be needed were hydrogen alone to be burnt.

The process described herein allows co-production of both a fuel stream for a gas turbine (for example) as described above and simultaneously a pure hydrogen stream for other purposes, such as for transportation fuel.

The production rates of the two streams can be varied with minimal Plant operational changes.

The present invention will now be described in more detail, by means of example only, with reference to the drawings, in which:
Figure 1 is a flow diagram illustrating a process in accordance with the present invention;
Figure 2 is a flow diagram illustrating an alternative process in accordance with the present invention; and
Figure 3 is a flow diagram illustrating a further process in accordance with the present invention.

In these Figures, a process for the production of hydrogen as (i) a pure product, and (ii) a mixture with nitrogen and water vapour for consumption as a fuel in a gas turbine is described. However, it will be understood that these are simply examples of the hydrogen products and export streams that can be obtained from the process of the present invention.

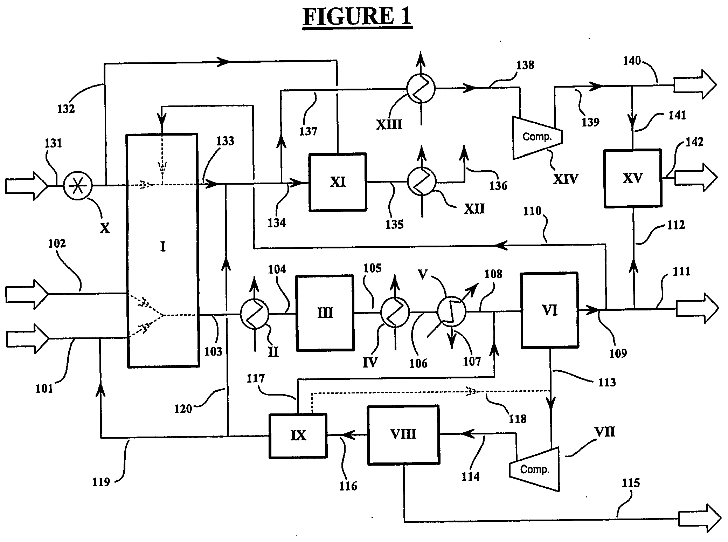

Figure 1 illustrates a hydrogen and carbon dioxide producing process in accordance with the invention.

In the process, a feed gas, which may be natural gas or other suitable hydrocarbon feedstock, is fed at a pressure, typically of 2170-4238kPa (300-600 psig), via a conduit 101 to a Steam Methane Reforming Unit **I.**

The Steam Methane Reforming Unit **I** includes a steam methane reformer (SMR), together with one or more of the following: (a) apparatus for desulphurising the feedstock, (b) a feedstock saturator circuit, which purpose is to admix steam to the natural gas, (c) a feedstock prereformer, (d) a means for removal of excess oxygen from the combustion products, and (e) one or more heat exchangers for the purpose of transferring heat.

The SMR may conveniently be a Fired Convective Reformer (FCR), as is assumed hereafter in this description, although it could also be of a different configuration.

Prior to, or within, Steam Methane Reforming Unit **I,** the feed (101) gas is mixed (via conduit 119) with a recycle stream containing both hydrogen and carbonaceous material.

The SMR within Steam Methane Reforming Unit **I** is also fed with hydrogen fuel via conduit 110. This fuel stream may also be preheated by heat recovery from within the described process (not shown).

Combustion air is also fed to the SMR in Steam Methane Reforming Unit **I.** This air passes via conduit 131 to Air Blower **X,** where it is compressed, before passing to the SMR in Steam Methane Reforming Unit I.

Also fed to Steam Methane Reforming Unit **I** is make-up water, via conduit 102, for the steam methane reforming reaction

Contained within the SMR are heat recovery coils, which reduce the temperature of the reformed gas, e.g. to a temperature of about 371°C (700°F), and the temperature of the combustion products, e.g. to a temperature of about 232°C (450°F). The actual exit temperatures will depend on the feedstock composition and particular SMR design.

Cooled reformed gas from the SMR, ideally at a temperature low enough to avoid metal dusting of any parts in contact with the gas, typically less than 454°C (850°F), and preferably less than less than 427°C (800°F), can be fed directly via conduits 103 and 104 to Shift Unit III, where the water-gas shift reaction is caused to take place, to convert carbon monoxide and steam to carbon dioxide and hydrogen.

Alternatively, the reformed gas may firstly be fed, as indicated, via Recovery Unit **II**, where heat is recovered and transferred to other stream(s) requiring heat, before then proceeding to the Shift Unit **III** for the water-gas shift reaction to be effected.

Additional heat recovery from the reformed gas stream to other streams (not shown) may take place in Recovery Unit II and Shift Unit **III.**

It will be understood by those skilled in the art that there are many sequential options and combinations of water-gas shift apparatus and heat recovery arrangements that may be used on the reformed gas stream between the exit of the SMR and the shift apparatus exit, of which that described above is but one example.

The reformed gas exits the Shift Unit **III**, via conduit 105, and passes to Heat Recovery Unit **IV,** where heat is recovered from the reformed gas stream. The stream then passes via conduit 106 to a Cooler V. Most of the water vapour contained in the reformed gas is condensed and recovered at this point, via conduit 107.

Alternatively, in a variation, final cooling may take place on the off-gas recycle stream contained in conduit 113.

Recovery of low-grade waste heat is maximised by heating of cold feed streams to the Plant. These streams include, but are not limited to, import demineralised water and feed natural gas. A further cost-effective use for this low-grade heat may be in, for example, the production of desalinated water for consumption within the Plant, or refrigeration duty via an ammonia absorption cycle, for instance.

The cooled reformed gas passes via conduit 108 to the Hydrogen Recovery Unit **VI,** which contains at least one or more of: a pressure swing absorption unit (PSA) and a membrane separation unit (MS). If advantageous, to maximise hydrogen recovery in a cost effective manner, it may also include additional compression facilities or other equipment.

Hydrogen product passes from the exit of Hydrogen Recovery Unit **VI** via conduit 109 at only slightly less than inlet pressure. Meanwhile, off-gases contained in conduit 113 are compressed from low pressure to a pressure, typically 2170 - 4238kPa (300-600 psig), sufficient to permit recycle to the feed gas contained in conduit 101 by Recycle Compressor **VII**.

The optimum configuration within Hydrogen Recovery Unit **VI** will depend on the costs of gas compression and energy consumption, PSA and MS Units costs and hydrogen recovery and efficiency.

The hydrogen product leaves Hydrogen Recovery Unit **VI** via conduit 109, typically at a pressure slightly below the inlet reformed gas pressure.

The hydrogen purity will depend on the internal configuration within Hydrogen Recovery Unit **VI.** However, if the hydrogen product flows directly from a PSA unit the gas will be of high purity, between 97 and 99.999 mol%, typically > 99.9 mol% hydrogen.

A part of the purified hydrogen from Hydrogen Recovery Unit **VI** is taken from conduit 109, and fed via conduit 110 as fuel gas for the SMR in Steam Methane Reforming Unit **I.** The remaining purified hydrogen is either exported as product via conduit 111, or is fed via conduit 112 to the GT Fuel Conditioner Unit **XV.**

Compressed off-gas, containing essentially all the carbonaceous material from the reformed gas, is fed via conduit 114 to the CO₂ Removal Unit **VIII,** where the majority (typically between 70% and 85%) of the CO₂ is removed from the gas by condensation against one or more cold fluids, one or more of which could be refrigerant. Depending on the purity of CO₂ required, a fractionation column may be provided to remove dissolved gases prior to export of the liquid CO₂ by-product via conduit 115. Where required, high pressure CO₂ export is achieved by the use of a pump contained within, or downstream of, CO₂ Removal Unit **VIII.**

CO₂ Removal Unit **VIII** may optimally contain a Refrigeration Unit (not shown), to provide liquid refrigerant against which to condense the CO₂. This Refrigeration Unit may, if economical or otherwise desirable, utilise CO₂ as a refrigerant. Alternatively, conventional refrigerants such as ammonia could be used.

In another variation, the Recycle Gas Compressor **VII** could be used to supply compression power for the refrigeration circuit.

Also included in CO₂ Removal Unit **VIII** are one or more of the following: a chiller to remove most of the water vapour present, a water collection and removal facility, driers (for example, mol sieve driers) to dry the gas, and one or more heat exchangers.

If some or all of the by-product CO₂ is required in gaseous form at relatively low pressure the liquid CO₂ can be vaporised, which, by the use of various heat recovery techniques, can considerably reduce the cost and energy consumption of the Refrigeration Unit.

The remaining gaseous stream, after removal of most of the CO₂, is fed via conduit 116 to a Hydrogen / CO₂ Recovery Unit **IX,** which consists of one or more membranes which are specific to hydrogen, CO₂, or both. Optimally, a permeate stream consisting of essentially hydrogen and CO₂, contained in conduit 117, is recycled to the reformed gas stream contained in conduit 108, upstream of Hydrogen Recovery Unit **VI.** Thus, the CO₂ and hydrogen recovery efficiencies can be increased.

In another variation, a stream, which is predominantly recovered CO₂, is also recycled via conduit 118 to the suction or intermediate stages of the Recycle Compressor **VII.**

Alternatively, the remaining gaseous stream from CO₂ Removal Unit **VIII** is recycled directly to the inlet of Steam Methane Reforming Unit **I** via conduit 119, without passing through Hydrogen / CO₂ Recovery Unit **IX.**

If the feed-gas to Steam Methane Reforming Unit **I** contains inert gases, such as nitrogen or argon, a continuous small purge of the recycle gas must be provided to avoid build-up of the inerts within the system. This purge gas can be utilised as fuel within Steam Methane Reforming Unit **I** or alternatively is fed directly via conduit 120 to the combustion products stream contained in conduit 133, exiting Steam Methane Reforming Unit **I.**

This purge gas stream is the only stream combusted within the described process that contains carbonaceous material and is thus the only source of CO₂ in the combustion products. The size of the purge will depend on the amount of inerts in the feed gas, but typically, for a gas containing 0.5 mol% inerts, the carbon loss will be about 1% i.e. the overall carbon capture efficiency would be about 99%.

This efficiency could be increased to virtually 100% by the installation of small inerts or CO₂ recovery unit on the purge gas (not shown).

The SMR may be optimally be operated such that the combustion product contained in conduit 133 is deficient in oxygen, and contains an excess of hydrogen or other reducing gases. This will minimise the amount of nitrogen oxides produced in the combustion process.

The description following assumes that this is the case; although it will be appreciated that combustion within the SMR may alternatively be carried out with an excess of oxygen.

Combustion products, contained in conduit 133, exiting Steam Methane Reforming Unit **I,** are directed in one of two ways, or both ways, depending on the mode of operation. The following description assumes that either compressed nitrogen is also to be produced, or that a fuel mixture suitable for feeding to a gas turbine set is to be produced, as well as pure hydrogen.

The combustion products exiting Steam Methane Reforming Unit **I** in conduit 133, containing excess of reducing gases, are split into two streams. One stream is routed via conduit 134 to a Catalytic Converter **XI.** In Catalytic Converter **XI** additional oxidant, carried in conduit 132 from Air Blower **X,** is mixed with the combustion products stream and passed over one or more suitable reduction and/or oxidation / combustion catalyst(s). In a variation, additional oxidant is provided by a separate compression device or fan.

It will be appreciated by those skilled in the art that if the SMR is operated with an excess of oxygen, then there is a need for prior injection of reducing gases to carry out a catalytic reduction of nitrogen oxides contained in the gas stream prior to feeding to Catalytic Converter **XI.** The reducing gases may be pure hydrogen, for example from conduit 110, or purge gases from conduit 120, or any other reducing gas.

Exiting gases from Catalytic Converter **XI,** now with an excess of oxygen, are fed via conduit 135 to Heat Recovery Unit **XII,** wherein heat is recovered for use elsewhere within the process. The exiting gases are then vented to atmosphere via vent 136.

A second combustion products stream originating from conduit 133 is routed via conduit 137 through Heat Recovery Unit **XIII,** wherein heat is recovered for use elsewhere within the process.

Further cooling and separation of water from the gas stream may take place (not shown) prior to the stream being fed via conduit 138 to Nitrogen Compressor **XIV,** wherein the combustion products stream is compressed to a pressure suitable for mixing with the hydrogen product stream contained in conduit 112, typically 1481 - 2860 kPa (200-400 psig). Nitrogen Compressor **XIV** may optimally comprise a multi-stage compressor, with coolers and water removal facilities.

The combustion products stream from Nitrogen Compressor **XIV**, which is essentially nitrogen, is either exported via conduit 140, or fed to GT Fuel Gas Conditioning Unit **XV,** via conduit 141.

It will be appreciated that, if only pure hydrogen and by-product CO₂ are to be produced, i.e. no nitrogen product or GT fuel, then the flow through conduit 137 will be zero and the process equipment downstream of conduit 137 redundant; i.e. Heat Recovery Unit **XIII,** Nitrogen Compressor **XIV**, and GT Fuel Gas Conditioning Unit **XV** would be unnecessary.

Hydrogen is fed via conduit 112 to GT Fuel Gas Conditioning Unit **XV,** whilst nitrogen is also fed to GT Fuel Gas Conditioning Unit **XV,** via conduit 141. In the GT Fuel Gas Conditioning Unit **XV** both streams, individually or in combination, are subject to, or nearly to, water saturation. Optimally, both streams, individually or in combination, are also subject to heating via waste heat recovered from within the process. The streams are combined prior to feeding to conduit 142 for export.

Although the indicated export stream is for use in a gas turbine, it will be appreciated that there are other uses for which this stream provides a suitable fuel.

A variation of GT fuel production in the process uses only hydrogen and water vapour, in which case the hydrogen product stream contained in conduit 112 alone would be subjected to water saturation and, optimally, heating from within the process prior to export.

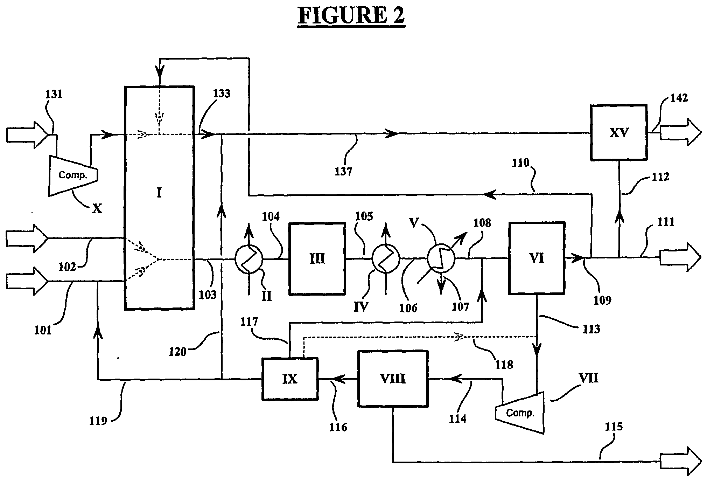

A simplified, higher efficiency, variation on the above-described process of Figure 1 is shown in Figure 2.

In the process of Figure 2 the principal product is a hydrogen mixture for consumption as fuel in a gas turbine, it being understood that this is but one example of many uses of the product from the process containing principally hydrogen, nitrogen and water vapour.

Most of the component parts are similar to that described in reference to Figure 1 above. Thus only the area where there are differences will be described below, which relate to the combustion side of the process, i.e. provision of combustion air and the treatment of combustion products.

The SMR within Steam Methane Reforming Unit **I** is fed with hydrogen fuel via conduit 110. This hydrogen stream may also be preheated by heat recovery from within the described process (not shown)

Combustion air is fed via conduit 131 to Air Compressor **X,** where it is compressed to a pressure sufficiently high such that the combustion products can be mixed with produced hydrogen in **GT** Fuel Gas Conditioning Unit **XV** without further compression, before passing to the SMR in Steam Methane Reforming Unit **I.**

The motive power for Air Compressor **X** may be provided by an electric motor, or other driver, or optimally a gas turbine (GT), wherein the excess heat from the GT combustion gases is recovered and utilised within the described process.

Compressed air for both the SMR in Steam Methane Reforming Unit **I** and the GT may originate from the same compressor.

Alternatively, compressed air for the SMR in Steam Methane Reforming Unit **I** may be provided from an associated power plant or other external source, thus obviating the need for compression within the described process.

The SMR may be optimally be operated such that the combustion product contained in conduit 133, is deficient in oxygen, and contains an excess of hydrogen or other reducing gases. The amount of nitrogen oxides produced in the combustion process will thus be minimised.

The description following assumes that this is so; although it will be appreciated that combustion within the SMR may be carried out with an excess of oxygen.

The combustion products exiting Steam Methane Reforming Unit I in conduit 133, containing principally nitrogen and water vapour, but also an excess of reducing gases such as hydrogen, may be mixed with purge gases contained in conduit 120 before passing to Catalytic Converter **XI**, where reduction and removal of the bulk of any nitrogen oxides contained in the combustion products is achieved. The purge gases in conduit 120 may otherwise be mixed with the hydrogen fuel stream in conduit 110, or mixed with hydrogen in conduit 111, or otherwise treated or exported.

The gases exiting Catalytic Converter **XI** are then fed directly via conduit 137 to GT Fuel Gas Conditioning Unit **XV.**

It will be appreciated by those skilled in the art that if the SMR is operated with an excess of oxygen, then there is a need for prior injection of reducing gases to carry out a catalytic reduction of nitrogen oxides contained in the gas stream in Catalytic Converter **XI**. The reducing gases may be pure hydrogen, for example from conduit 110, or purge gases via conduit 120, as indicated, or other any other reducing gas.

It will also be appreciated that, if sufficient reducing gases are present in the combustion products, then the production of nitrogen oxides will be sufficiently low to obviate the need for Catalytic Converter **XI**, in which case the combustion products exiting Steam Methane Reforming Unit **I** can be fed directly to GT Fuel Gas Conditioning Unit **XV.**

Hydrogen is fed via conduit 112 to GT Fuel Gas Conditioning Unit **XV,** whilst combustion products are also fed to GT Fuel Gas Conditioning Unit **XV,** via conduit 137. In the GT Fuel Gas Conditioning Unit **XV** both streams, individually or in combination, are subject to, or nearly to, water saturation. Optimally, both streams, individually or in combination, are also subject to heating via waste heat recovered from within the process. The streams are then combined prior to feeding to conduit 142 for export.

Although the indicated export stream is for use in a gas turbine, it will be appreciated that there are other uses for which this stream provides a suitable fuel.

Pure hydrogen may be extracted as a product via conduit 111 in the described process, although it will be appreciated that this will reduce the hydrogen concentration in the final GT fuel product contained in conduit 142. Alternatively, a part of the combustion products contained in conduits 133 or 137 can be vented, or used elsewhere, in order to maintain a constant GT fuel composition.

In this regard, the production of hydrogen for consumption as fuel in a gas turbine combined cycle power generation plant is described; however it will be understood that this is simply one example of many power plants into which the hydrogen production plant could be integrated.

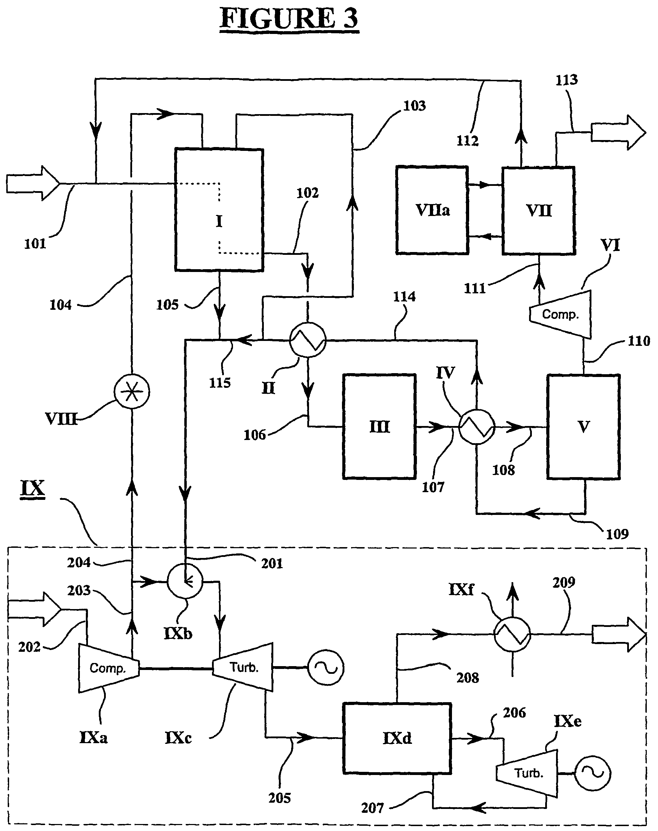

Figure 3 illustrates a further hydrogen and carbon dioxide producing process in accordance with the invention.

In the process, a feed gas, which may be natural gas or other suitable feedstock, is fed via a conduit 101 at a pressure of typically 2859 - 4238 kPa (400-600 psig) to a Steam Methane Reforming Unit, **I.**

This unit **I** includes a steam methane reformer (SMR), which may be a fired convective reformer (FCR), together with one or more of the following: (a) apparatus for desulphurising the feedstock, (b) a feedstock saturator circuit, which purpose is to admix steam to the natural gas, (c) a feedstock pre-reformer, (d) a means for removal of excess oxygen from the combustion products, and (e) one or more heat exchangers for the purpose of transferring heat.

Prior to, or within, Steam Methane Reforming Unit **I,** the feed gas is mixed (via conduit 112) with a recycle stream containing both hydrogen and carbonaceous material.

The SMR within unit **I** is also fed with hydrogen fuel via conduit 103 and with combustion air via conduit 104. Both of these feed streams are at a pressure sufficient to be able to feed the combustion products to the hydrogen product export stream contained in conduit 201 without further recompression.

It should be noted that in the process of Figure 3, combustion air is supplied to Steam Methane Reforming Unit **I** from the Gas Turbine Air Compressor, **IXa,** via conduit 204 to a Booster Compressor, **VIII.** In this case (as indicated in Figure 3), only a minimal increase in pressure is required, permitting the use of a rotary fan or turbine type compression unit.

However, an alternative option is to supply air to the SMR via a separate dedicated compressor, independent of the Gas Turbine set.

A further possibility is to design the Gas Turbine Air Compressor to provide the additional pressure required, whilst feeding the Combustor at a slightly lower pressure.

In one embodiment, excess hydrogen fuel may be fed to the SMR via conduit 103, so that all the oxygen in the combustion air flowing through the SMR is consumed, and combustion occurs in an overall reducing atmosphere. This would also considerably reduce, or substantially eliminate, any NOx production. It is further possible to route the entire hydrogen product stream contained in conduit 114 or 109 through the SMR via conduit 103.

The steam reforming of the feed gas takes place in the SMR, resulting in a reformed gas stream comprising hydrogen and carbon monoxide and a combustion products stream.

The SMR contains heat recovery coils, which cool the reformed gas stream to a temperature of about 371°C (700°F) and the combustion products stream to about 232°C (450°F). The actual exit temperatures will depend on the feedstock composition and particular SMR design.

The combustion products stream exits the SMR via conduit 105, and proceeds to the gas turbine fuel system without further compression. The pressure at this stage would typically be in the range 200 - 300 psig (1480 - 2170 kPa), but could be lower or higher depending on the particular gas turbine design.

The SMR combustion products stream may be fed to an auxiliary combustion unit where reducing gas, which could be hydrogen or an inert purge gas containing some hydrogen and carbonaceous material, is introduced to the stream, and where subsequent catalytic combustion occurs, in order to remove excess oxygen. This process also removes substantially all NOx created in the SMR.

However, it may be deemed that the level of oxygen (typically 1.5 - 2 mol%) and NOx in the combustion products stream on exit from the SMR is acceptable for use in the Gas Turbine fuel gas stream without further processing.

When a catalytic combustor is used, the exit stream from this catalytic combustor can be fed either directly to the outlet conduit 105, or can first pass through a heat recovery device to recover heat for use within the SMR. Depending on the overall energy balance, it may be advantageous to further heat the combustion products contained in conduit 105 utilising waste heat from within the Hydrogen Production Plant.

Cooled reformed gas from the SMR, ideally cooled to a temperature low enough to avoid metal dusting of any parts in contact with the gas, typically less than about 454°C (850°F), can be fed directly via conduits 102 and 106 to Shift Unit **III,** where a water-gas shift reaction is caused to take place to convert the carbon monoxide to carbon dioxide and hydrogen.

Alternatively, the reformed gas can firstly be fed, as indicated, via Recovery Unit **II,** where heat is recovered and transferred to the hydrogen product fuel streams contained in conduits 103 and 115, before then proceeding to Shift Unit **III** for the water-gas shift reaction to be effected.

A variant of the described method and associated apparatus of Figure 3 involves a separate pre-heater for the hydrogen fuel to the SMR. In this variant, only the hydrogen fuel to the Gas Turbine is saturated in Heat Recovery Unit **IV,** not the fuel to the SMR.

Additional heat recovery from the reformed gas stream to other streams (not shown) may take place in Recovery Unit **II** and Shift Unit **III.**

It will be understood by those skilled in the art that there are many sequential options and combinations of water-gas shift apparatus and heat recovery arrangements that may be used on the reformed gas stream between the exit of the SMR and the shift apparatus exit, of which that described above is but one example.

The reformed gas stream then exits the Shift Unit **III,** via conduit 107, and passes to Heat Recovery Unit **IV,** where the reformed gas stream is cooled. Most of the water vapour contained in the reformed gas is condensed and recovered at this point.

Alternatively, in a variation, final cooling may take place on the off-gas recycle stream contained in conduit 110.

Recovery of low-grade waste heat may be maximised by its use in heating of cold feed streams to the plant, which include, but are not limited to, import demineralised water and feed natural gas. A further cost-effective use for this low-grade heat may be in, for example, the production of desalinated water for consumption within the plant.

After cooling in the Heat Recovery Unit **IV,** the reformed gas stream is fed via conduit 108 to the Hydrogen Recovery Unit **V,** where most of the hydrogen is recovered from the reformed gas stream.

The Hydrogen Recovery Unit **V** contains at least one or more of: a pressure swing absorption unit (PSA) and a membrane separation unit (MS). If advantageous, to maximise hydrogen recovery in a cost effective manner, it may also include additional compression or other equipment.

The hydrogen product leaves the exit of Hydrogen Recovery Unit **V** via conduit 109, typically at a pressure slightly below the inlet reformed gas pressure. The hydrogen purity will depend on the internal configuration within Hydrogen Recovery Unit **V,** but if direct from a PSA unit the gas will be of high purity, typically > 99.9 mol% hydrogen.

The Heat Recovery Unit **IV** comprises a means for saturating and reheating the hydrogen product gas (from Hydrogen Recovery Unit **V)** contained in conduit 109. This may be via a desaturator / saturator circuit on the reformed gas and hydrogen streams respectively, or some other advantageous combination of process operations.

Once the hydrogen gas has left Hydrogen Recovery Unit **V** and been saturated and reheated, it travels via conduit 114 to Heat Recovery Unit **II** where it is further heated. The hydrogen gas is then split into two streams, one as fuel to the SMR via conduit 103, and the other to the gas turbine via conduit 115.

Meanwhile, off-gases from the Hydrogen Recovery Unit **V** exit via conduit 110 and are compressed by Recycle Compressor **VI** from low pressure, typically 101 - 203kPa (0-15 psig), to a pressure sufficient to subsequently permit recycling (via conduit 112) to the feed gas contained in conduit 101.

Although shown diagrammatically in this instance as being downstream of Hydrogen Recovery Unit **V,** the Recycle Compressor **VI** can preferably be located within Hydrogen Recovery Unit **V,** for example between a PSA Unit and an MS Unit. The optimum configuration within Hydrogen Recovery Unit V will depend on the costs of gas compression and energy consumption, PSA and MS Units costs and on hydrogen recovery and efficiency.

The compressed off-gas, containing essentially all the carbonaceous material from the reformed gas, is then fed via conduit 111 to the CO₂ Removal Unit **VII.** A major equipment item within the CO₂ Recovery Unit is a Refrigeration Unit **VIIa,** which provides liquid refrigerant against which to condense the CO₂.

Although shown diagrammatically as separate from CO₂ Removal Unit **VII,** in practise it may be advantageous to integrate the Refrigeration Unit **VIIa** and CO₂ Removal Unit **VII**.

Also included in Unit **VII** are one or more of the following: a chiller to remove most of the water vapour present, a water collection and removal facility, driers (for example, mol sieve driers) to dry the gas, and one or more heat exchangers.

Within the CO₂ Removal Unit **VII** the majority, typically about 85%, of the CO₂, is removed from the gas by condensation against cold refrigerant. The liquid CO₂ exits the CO₂ Removal Unit **VII** via conduit 113.

Depending on the purity of CO₂ required, a fractionation column may be provided to remove dissolved gases prior to export of the liquid CO₂ by-product via conduit 113.

In the event that the by-product CO₂ is required in gaseous form, the liquid CO₂ obtained can subsequently be vaporised. Heat recovery techniques could be used in relation to this step in order to considerably reduce the cost and energy consumption of the Refrigeration Unit **VIIa.**

The remaining gaseous stream, after removal of most of the CO₂, is reheated to recover "cold" against other streams within Refrigeration Unit **VIIa** or CO₂ Removal Unit **VII,** before being recycled to the inlet of Steam Methane Reforming Unit **I** via conduit 112.

If the feed-gas to Unit **I** contains inert gases such as nitrogen or argon, a continuous small purge of the recycle gas (not shown) must be provided to avoid build-up of the inert gases within the system. The purge gas can be utilised as fuel within Unit **I** or within the Power Production Plant.

This stream is the only stream combusted within the Hydrogen or Power Production Plants that contains carbonaceous material and is thus the only source of CO₂ in the combustion products. The size of the purge will depend on the amount of inert gas in the feed gas, but typically, for a gas containing 0.5 mol% inert gas, the carbon loss might be between 5 and 3 % or lower. i.e. the overall carbon capture efficiency would be 95 - 98% or higher. A carbon loss as low as about 1% can in fact be achieved with the present invention, i.e. the overall carbon capture efficiency would be about 99%.

This could be easily increased to 100% by the installation of a small inert gas recovery unit on the purge gas.

The Power Production Plant shown in Figure 3 is described briefly below; although this does not itself form a part of the invention herein described and is included only for completeness.

The Power Production Plant, **IX**, would typically utilise gas turbine driven generator(s) followed by heat recovery / steam generation, with steam turbine driven generator(s), i.e. a Combined Cycle system, as described briefly below.

Combustion air is passed via conduit 202 to a Gas Turbine Air Compressor **IXa,** which may be driven by the associated Gas Turbine **IXc** as indicated. Pressurised combustion air is passed to the Combustor **IXb,** via conduit 203, where it is mixed with fuel gas from the Hydrogen Production Plant, contained in conduit 201.

Combustion products are fed directly to the Gas Turbine, which powers the electrical generator. A compressed air sidestream, via conduit 204, may be taken, as indicated, from conduit 203 to feed the Hydrogen Production Plant.

Hot turbine exhaust gases are fed via conduit 205 to the Heat Recovery Steam Generation (HRSG) Unit **IXd,** where high pressure superheated steam is produced. Additional fuel firing may be provided before or within Unit **IXd** depending on the particular plant design.

Ancillary equipment necessary for operation of the system, such as boiler feedwater systems, is not shown on this diagram.

Steam from the HRSG Unit is fed via conduit 206 to a Steam Turbine **IXe**, which powers another electrical generator. Steam condensate produced by the vacuum condensers (not shown) is recycled to Heat Recovery Steam Generation Unit **IXd** via conduit 207.

The exhaust gases from Heat Recovery Steam Generation Unit **IXd** are either vented directly to atmosphere, or preferably routed through conduit 208 to a low-grade heat recovery system **IXf**, before venting to atmosphere via vent stack 209.

It will be clear to the skilled man that the process of the invention has a number of advantages over the prior art.

The process unit operations employed in separating and producing hydrogen and CO₂ from the other reformed gas components within the present invention are extremely simple, robust, and well proven. Operation requires minimal operator intervention.

Another benefit of the process of the invention is the avoidance of the need to directly generate any steam within the Hydrogen Production Plant. All the steam necessary for the SMR reaction can be generated via direct saturation of the feed gas by contacting with circulating hot water. This has a significant benefit in reducing plant complexity and costs, together with the ability to recover a greater proportion of low-grade heat.

Advantageously, there are virtually no effluent streams produced by the hydrogen production process of the present invention. Specifically, in the present invention there are normally no gaseous effluent streams, no solid by-products produced, and the only liquid effluent is a small aqueous blowdown stream from the saturator circuits.

The major potential disadvantage of pre-combustion decarbonisation, as known in the prior art, is the loss of efficiency inherent in the hydrogen production process step.

In a conventional hydrogen production plant (and also with CO₂ by-product export), heat is required to provide:
(a) heat of reaction of the reforming reaction; and
(b) vaporisation of water to steam (steam is one of the reactants).

Energy, normally in the form of heat, is removed or lost from the system to atmosphere in the following ways:
(c) via combustion products vented to atmosphere;
(d) via cooling of reformed gas & condensation of process steam;
(e) via pumping and compression of the feed / product and recycle streams;
(f) via the CO₂ by-product stream; and
(g) via material / energy export.

Consumption of energy via (a) and (b) should not be consequential because this energy is contained in the product hydrogen, and thus should not be considered an efficiency loss. Nonetheless, when considering the LCV value of feedstock and products rather than HCV, (b) should be considered a permanent loss, since this latent heat addition is rarely, if ever, recovered.

Within a conventional hydrogen production unit, various heat recovery mechanisms are normally employed to minimise effects (c) to (g), with varying degrees of success.

A principal benefit of the current invention is the ability to minimise energy losses described in (c) to (g) above and thus maximise the efficiency of the overall power production process.

In the present invention involving the production of liquid CO₂, a further loss needs to be considered:
(h) refrigeration energy requirements for CO₂ liquefaction.

Energy minimisations may be achieved in the present invention in the following ways:

### Combustion Products

In embodiments of the present invention, the combustion products from the SMR need not be vented to atmosphere, but rather combustion within the SMR may be carried out at a pressure such that the combustion products can be mixed with the hydrogen product without further compression. If necessary, a means for removal of excess oxygen from the combustion products may be contained within, or downstream of, the overall Steam Methane Reforming Unit.

In other embodiments of the invention, however, combustion may be carried out at lower pressures, e.g. close to atmospheric pressure.

### Reformed Gas Cooling

Removal of low-grade heat and condensation of the contained steam is one of the principle areas of heat loss to atmosphere within steam reforming plant.

When producing a hydrogen product stream for an electrical power production plant, e.g. to be fed to a gas turbine, or other combustion device, hydrogen production via the process described herein may result in minimal heat loss through coincident heat recovery and saturation of the hydrogen product stream as well as the heating of other cold streams.

### Pumping and Compression

In embodiments of the present invention, the two principal power consumers in the overall process are the air compressor from which the combustion air for the SMR originates, and the recycle compressor, which recompresses the recovered CO₂, together with smaller amounts of other carbonaceous material (i.e. methane and carbon monoxide) and some inert gases.

Carrying out combustion at high pressure improves the overall power production efficiency when produced hydrogen is used as fuel for a power plant, such as when feeding to a gas turbine.

Compressing the recovered CO₂ and other off-gas allows for the efficient removal of CO₂ via condensation at low temperature (e.g. from -56°C to ambient temperature, in particular from -50°C to 0°C), for example in a cryogenic unit, as well as the recycling of the remaining carbonaceous gases to the SMR for reforming.

Thus, although the compression power may be relatively high, this is a simple and very thermally efficient way of removing CO₂ from the system, as a liquid, as well as ensuring that a large proportion of the carbon in the feed is captured (typically > 95%, for example > 98%).

However, in other embodiments, where the combustion may be carried out at lower pressures, e.g. close to atmospheric pressure, the air compressor is not a major consumer of power (although the recycle compressor remains a major consumer of power).

### CO₂ By-product Stream

The removal of CO₂ from the process stream utilising a solvent for an absorption / stripping process, as in the prior art, requires considerable amounts of energy from within the process, at a level which cannot be considered "low grade heat".

Further, the CO₂ thus recovered is in gaseous form, at low or near atmospheric pressure. In order to be able to export the CO₂ as a compressed gas requires compression facilities. Equally, in order to be able to export the CO₂ as a liquid requires either significant additional refrigeration or compression energy.

In contrast, in the present invention no solvent CO₂ removal is required. The only requirements are the compression and refrigeration systems which would be required in any case for CO₂ export, and which are integrated into the process, thus saving significant investment cost and energy.

### Material / Energy Export

An export stream, such as steam, is often incorporated into a conventional hydrogen plant because of inefficient heat recovery and the inability to attain an energy balance.

It should be noted that an energy export stream (such as steam) should not be credited with 100% of its energy content, but only the net amount that is productive, typically < 35% for conversion of steam to electrical energy.

In the present invention there needs to be no export stream other than the product hydrogen stream and by-product CO₂ stream. The significant energy export may be contained within the product hydrogen stream, which enhances the overall power generation efficiency.

### Refrigeration Energy Requirements

A significant energy consumer in the process of the present invention is the refrigeration compressor / package, for producing the liquid CO₂.

However, the size and cost of the refrigeration plant could be considerably reduced if the requirement were for gaseous CO₂ rather than liquid. Specifically, in the event that some or all of the by-product CO₂ is required in gaseous form, the liquid CO₂ obtained by the present invention can subsequently be vaporised. Heat recovery techniques could be used in relation to this step in order to considerably reduce the cost and energy consumption of the refrigeration compressor / package.

Liquid CO₂ could also be utilised as the refrigerant in the envisaged process, if cost / energy savings indicated that this was advantageous.

Overall, the energy requirement for production of liquid CO₂ by the methods described herein can be significantly less than that required by processes that utilise solvents to absorb CO₂ with subsequent recompression and liquefaction.

## Claims

1. A process for the production of hydrogen with the co-production and capture of carbon dioxide, wherein the process comprises steam methane reforming a hydrocarbon feedstock in the presence of a fuel and a combustion sustaining medium using (i) a steam methane reformer unit that comprises a steam methane reformer (SMR), and (ii) a water gas shift unit, so as to result in the production of a reformed gas stream comprising hydrogen and carbon dioxide, and a combustion products stream, wherein the process comprises the steps of:
(a) separating and removing most or all of the hydrogen from the reformed gas stream; and then
(b) recovering most or all of the carbon dioxide as a separate by-product stream by condensation of liquid carbon dioxide from the gas stream; and then
(c) recycling the remaining gases from the gas stream by mixing these gases with the SMR feed stream;
wherein the fuel is greater than 50 mol% hydrogen hydrogen, and greater than 85% of the carbon contained in the feed stream to the process is recovered and exported as carbon dioxide.

2. A process according to Claim 1, wherein the fuel for combustion within the SMR contains 95mol% or more hydrogen, when measured on a dry basis.

3. A process according to any one of the preceding claims where the combustion of the fuel in the SMR is carried out in a reducing atmosphere, whereby all of the oxygen is consumed and the exiting combustion products stream contains an excess of hydrogen or other reducing gas.

4. A process according to any one of the preceding claims wherein greater than 95% of the carbon contained in the feed stream to the process is recovered and exported as carbon dioxide.

5. A process according to any of the preceding claims, wherein greater than 99% of the carbon contained in the feed stream to the process is recovered and exported as carbon dioxide and wherein the feedstock comprises less than 0.5 mol% in total of nitrogen, argon, and other inert gases.

6. A process according to any one of the preceding claims wherein the fuel comprises water vapour at a level of 5mol% to 30mol%.

7. A process according to any one of the preceding claims wherein the steam methane reforming comprises combustion of the fuel in the SMR at a pressure of 115 kPa (2 psig) or higher.

8. A process according to Claim 7 wherein the pressure is 700kPa to 2500kPa or higher.

9. A process according to any one of the preceding claims, wherein in step (a) 75% or more of the hydrogen in the reformed gas stream is separated and removed.

10. A process according to any one of the preceding claims, wherein the process comprises:
mixing the some or all of the recovered hydrogen from step (a) with the combustion products stream to produce an export hydrogen product stream.

11. A process according to Claim 10 wherein the export hydrogen product stream comprises from 25 to 50 mol% hydrogen, from 15 to 35 mol% steam and from 25 to 40 mol% nitrogen.

12. A process according to any one of the preceding claims, wherein the apparatus used to recover carbon dioxide product in step (b) comprises a refrigeration unit and one or more of the following: a chiller to condense most of the water vapour present; a water collection and removal facility; driers to dry the gas; and one or more heat exchangers.

13. A process according to any of the preceding claims in which the condensed carbon dioxide is subject to a refining step for the removal of dissolved gases.

14. A process according to any one of the preceding claims wherein the hydrogen product is separated and removed from the gas stream using a hydrogen recovery unit that comprises one or more unit selected from: a pressure swing absorption unit and a membrane separation unit.

15. A process according to any one of the preceding claims wherein the hydrogen gas removed in step (a) is split into two streams, one of which is a hydrogen fuel stream for the SMR and one of which is, or forms a part of, an export hydrogen stream.

16. A process according to any one of the preceding claims, wherein the SMR comprises a number of tubes through which the heat for the endothermic reforming reaction is transferred principally by means of convection.

17. A process according to any one of the preceding claims, wherein the process further comprises:
recovering further hydrogen and / or further carbon dioxide following step (b) by using one or more membrane separation units.

18. A process according to Claim 17 wherein the further recovered hydrogen and/or carbon dioxide is recycled by mixing this gas or gases with: the reformed gas stream upstream of step (a); or
the gas stream downstream of step (a) and upstream of step (b).

19. A process according to any one of the preceding claims, wherein the combustion products stream from the SMR is co-mixed with a substantially pure hydrogen stream or a stream consisting essentially of hydrogen and water vapour to produce an export hydrogen product stream.

20. A process according to any one of the preceding claims, whereby energy is recovered from the hydrogen production process and imparted to the hydrogen product stream or its precursors via direct heat exchange and / or vaporisation of water, the produced water vapour being a constituent of the hydrogen product stream.

21. A process according to any one of the preceding claims, whereby the hydrogen product stream is exported at a temperature greater than 120°C.

22. A process according to Claim 21, whereby the hydrogen product stream is exported at a temperature greater than 210°C.

23. A process according to any one of the preceding claims, where a second product stream of hydrogen of purity greater than 99mol % is coproduced with the hydrogen stream produced in step (a), in a variable proportion of between 0 and 100% of the total hydrogen production rate.

24. A process according to any one of the preceding claims where combustion of the fuel in the SMR is carried out at a pressure sufficiently high that the combustion products stream may be co-mixed with the hydrogen product stream without further compression.

25. A process according to any one of the preceding claims wherein the combustion-sustaining medium is air, or oxygen, or oxygen enriched air.

## Patentansprüche

1. Ein Verfahren zur Herstellung von Wasserstoff unter gleichzeitiger Herstellung und Abfangung von Kohlendioxid, wobei das Verfahren die Methan-Dampfreformierung eines Kohlenwasserstoff-Ausgangsbrennstoffs in Gegenwart eines Brennstoffs und eines Verbrennungserhaltungs-Mediums aufweist, unter Verwendung (i) einer Methan-Dampfreformer-Einheit, die einen Methan-Dampfreformer (SMR) aufweist, und (ii) eine Wassergas-Shift-Einheit, die zur Herstellung eines Spaltgasstroms führt, der Wasserstoff und Kohlendioxid und einen Verbrennungsproduktstrom aufweist, wobei das Verfahren wiederum die folgenden Schritte aufweist:
(a) die Trennung und das Entfernen des größten Teils oder des gesamten Wasserstoffs aus dem Spaltgasstrom; und dann
(b) die Rückgewinnung des größten Teils oder des gesamten Kohlendioxids als separaten Abproduktstrom durch Kondensation von flüssigem Kohlendioxid aus dem Gasstrom; und dann
(c) die Wiederaufbereitung des verbleibenden Gases aus dem Gasstrom durch Mischung dieser Gase mit dem SMR-Zustrom;
wobei der Brennstoff mehr als 50 mol % Wasserstoff umfasst und mehr als 85% des im Zustrom zum Verfahren enthaltenen Kohlenstoffs wiedergewonnen und als Kohlendioxid exportiert wird.

2. Ein Verfahren gemäß Anspruch 1, wobei der Brennstoff für die Verbrennung im SMR 95 mol% oder mehr Wasserstoff enthält, wenn er auf Trockenbasis gemessen wird.

3. Ein Verfahren gemäß eines der vorhergehenden Ansprüche, wobei die Verbrennung des Brennstoffs im SMR in einer reduzierenden Atmosphäre ausgeführt wird, wobei der gesamte Sauerstoff verbraucht wird und der austretende Verbrennungsproduktstrom einen Überschuss an Wasserstoff oder eines anderen Reduktionsgases enthält.

4. Ein Verfahren gemäß eines der vorhergehenden Ansprüche, wobei mehr als 95% des im Zustrom zum Verfahren enthaltenen Kohlenstoffs wiedergewonnen und als Kohlendioxid exportiert wird.

5. Ein Verfahren gemäß eines der vorhergehenden Ansprüche, wobei mehr als 99% des im Zustrom zum Verfahren enthaltenen Kohlenstoffs wiedergewonnen und als Kohlendioxid exportiert wird und wobei der Ausgangsbrennstoff insgesamt weniger als 0,5 mol% Stickstoff, Argon und andere Inertgase aufweist.

6. Ein Verfahren gemäß eines der vorhergehenden Ansprüche, wobei der Brennstoff Wasserdampf in einer Höhe von 5 mol% bis 30 mol% aufweist.

7. Ein Verfahren gemäß eines der vorhergehenden Ansprüche, wobei die Methan-Dampfreformierung eine Verbrennung des Brennstoffs im SMR bei einem Druck von 115 kPa (2 psig) oder höher aufweist.

8. Ein Verfahren gemäß Anspruch 7, wobei der Druck bei 700kPa bis 2500kPa oder höher liegt.

9. Ein Verfahren gemäß eines der vorhergehenden Ansprüche, wobei in Schritt (a) 75% oder mehr des Wasserstoffs im Spaltgasstrom getrennt und entfernt werden.

10. Ein Verfahren gemäß eines der vorhergehenden Ansprüche, wobei das Verfahren Folgendes aufweist:
die Mischung eines Teils oder des gesamten rückgewonnenen Wasserstoffs aus Schritt (a) mit dem Verbrennungsproduktstrom, um einen Export-Wasserstoff-Produktstrom zu erzeugen.

11. Ein Verfahren gemäß Anspruch 10, wobei der Export-Wasserstoff-Produktstrom 25 bis 50 mol% Wasserstoff, 15 bis 35 mol% Dampf und 25 bis 40 mol% Stickstoff aufweist.

12. Ein Verfahren gemäß eines der vorhergehenden Ansprüche, wobei der Apparat, der für die Rückgewinnung des Kohlendioxidprodukts in Schritt (b) verwendet wird, eine Kühleinheit und eines oder mehrere der folgenden Elemente aufweist: einen Kühler, um den größten Teil des vorhandenen Wasserdampfes zu kondensieren; eine Wassersammel- und Wasserentsorgungsanlage; Trockner für das Trocknen von Gas; und einen oder mehrere Wärmetauscher.

13. Ein Verfahren gemäß eines der vorhergehenden Ansprüche, bei dem das kondensierte Kohlendioxid einem Raffinationsschritt für die Beseitigung der gelösten Gase unterzogen wird.

14. Ein Verfahren gemäß eines der vorhergehenden Ansprüche, wobei das Wasserstoffprodukt aus dem Gasstrom abgetrennt und entnommen wird, unter Verwendung einer Wasserstoffrückgewinnungseinheit, die eine oder mehrere der folgenden Einheiten aufweist: eine Druckwechselabsorptionseinheit und eine Membrantrennungseinheit.

15. Ein Verfahren gemäß eines der vorhergehenden Ansprüche, wobei das Wasserstoffgas, das in Schritt (a) entnommen wurde, in zwei Ströme aufgeteilt wird, einer davon ist ein Wasserstoff-Brennstoffstrom für den SMR und einer davon ist oder bildet einen Teil von einem Export-Wasserstoffstrom.

16. Ein Verfahren gemäß eines der vorhergehenden Ansprüche, wobei der SMR eine Reihe von Rohren aufweist, durch die die Wärme für die endothermische Reformierungsreaktion hauptsächlich durch Konvektion übertragen wird.

17. Ein Verfahren gemäß eines der vorhergehenden Ansprüche, wobei das Verfahren darüberhinaus Folgendes aufweist:
die Rückgewinnung von weiterem Wasserstoff und/oder weiterem Kohlendioxid nach Schritt (b), unter Verwendung einer oder mehrerer Membrantrennungseinheiten.

18. Ein Verfahren gemäß Anspruch 17, wobei der darüberhinaus rückgewonnene Wasserstoff und/oder das Kohlendioxid aufbereitet wird, durch die Mischung dieses Gases oder der Gase mit: dem Spaltgasstrom, der Schritt (a) vorgeschaltet ist; oder
dem Gasstrom, der Schritt (a) nachgeschaltet und Schritt (b) vorgeschaltet ist.

19. Ein Verfahren gemäß eines der vorhergehenden Ansprüche, wobei der Verbrennungsproduktstrom vom SMR weiter mit einem im Wesentlichen reinen Wasserstoffstrom oder einem Strom gemischt wird, der hauptsächlich aus Wasserstoff und Wasserdampf besteht, um einen Export-Wasserstoffproduktstrom zu erzeugen.

20. Ein Verfahren gemäß eines der vorhergehenden Ansprüche, wobei Energie aus dem Wasserstoffproduktionsprozess rückgewonnen und an den Wasserstoffproduktstrom oder seine Vorläufer über direkten Wärmeaustausch und/oder Wasserverdampfung weitergegeben wird, der erzeugte Wasserdampf ist dabei ein Bestandteil des Wasserstoffproduktstroms.

21. Ein Verfahren gemäß eines der vorhergehenden Ansprüche, wobei der Wasserstoffproduktstrom bei einer Temperatur über 120°C exportiert wird.

22. Ein Verfahren gemäß Anspruch 21, wobei der Wasserstoffproduktstrom bei einer Temperatur über 210°C exportiert wird.

23. Ein Verfahren gemäß eines der vorhergehenden Ansprüche, bei dem ein zweiter Wasserstoffproduktstrom mit einer Reinheit über 99mol % mit dem in Schritt (a) erzeugten Wasserstoffstrom, in einem variablen Verhältnis zwischen 0 und 100% der gesamten Wasserstoffproduktionsrate, koproduziert wird.

24. Ein Verfahren gemäß eines der vorhergehenden Ansprüche, bei dem die Verbrennung des Brennstoffs im SMR bei einem Druck ausgeführt wird, der ausreichend hoch ist, damit der Verbrennungsproduktstrom ohne weitere Kompression weiter mit dem Wasserstoffproduktstrom gemischt werden kann.

25. Ein Verfahren gemäß eines der vorhergehenden Ansprüche, wobei das Verbrennungserhaltungs-Medium Luft oder Sauerstoff oder mit Sauerstoff angereicherte Luft ist.

## Revendications

1. Un procédé de production d'hydrogène avec la co-production et la capture de dioxyde de carbone, où le procédé comprend le reformage par la vapeur de méthane à partir d'une charge d'hydrocarbures en présence d'un combustible et d'un milieu de combustion au moyen (i) d'une unité vaporeformeur de méthane qui comprend un vaporeformeur de méthane (SMR), et (ii) d'une unité de conversion de gaz à eau, de façon à aboutir à la production d'un flux de gaz reformé contenant de l'hydrogène et du dioxyde de carbone, et un flux de produits de combustion, le procédé comprenant les opérations suivantes :
(a) la séparation et l'élimination de la majeure partie ou de la totalité de l'hydrogène du flux de gaz reformé, et ensuite
(b) la récupération de la majeure partie ou de la totalité du dioxyde de carbone sous la forme d'un flux de sous-produits séparé par la condensation de dioxyde de carbone liquide provenant du flux de gaz, et ensuite
(c) le recyclage des gaz restants provenant du flux de gaz par le mélange de ces gaz avec le flux d'alimentation SMR,
où le combustible est plus de 50% en moles d'hydrogène, et plus de 85% du carbone contenu dans le flux d'alimentation vers le procédé est récupéré et exporté sous la forme de dioxyde de carbone.

2. Un procédé selon la Revendication 1, où le combustible destiné à combustion à l'intérieur du SMR contient 95% en moles ou plus hydrogène lorsqu'il est mesuré sur une base sèche.

3. Un procédé selon l'une quelconque des Revendications précédentes où la combustion du combustible dans le SMR est exécutée dans une atmosphère réductrice, grâce à quoi la totalité de l'oxygène est consommée et le flux de produits de combustion en sortie contient un excès d'hydrogène ou d'un autre gaz réducteur.

4. Un procédé selon l'une quelconque des Revendications précédentes où plus de 95% du carbone contenu dans le flux d'alimentation vers le procédé est récupéré et exporté sous la forme de dioxyde de carbone.

5. Un procédé selon l'une quelconque des Revendications précédentes, où plus de 99% du carbone contenu dans le flux d'alimentation vers le procédé est récupéré et exporté sous la forme de dioxyde de carbone et où la charge contient moins de 0,5% en moles au total d'azote, d'argon et d'autres gaz inertes.

6. Un procédé selon l'une quelconque des Revendications précédentes où le combustible contient de la vapeur d'eau à un niveau de 5% en moles à 30% en moles.

7. Un procédé selon l'une quelconque des Revendications précédentes où le reformage par la vapeur de méthane comprend la combustion du combustible dans le SMR à une pression de 115 kPa (2 psig) ou plus.

8. Un procédé selon la Revendication 7 où la pression est de 700 kPa à 2500 kPa ou plus.

9. Un procédé selon l'une quelconque des Revendications précédentes, où à l'opération (a) 75% ou plus de l'hydrogène dans le flux de gaz reformé est séparé et éliminé.

10. Un procédé selon l'une quelconque des Revendications précédentes, où le procédé comprend :
le mélange d'une partie ou de la totalité de l'hydrogène récupéré à l'opération (a) avec le flux de produits de combustion de façon à produire un flux de produit d'hydrogène d'export.

11. Un procédé selon la Revendication 10 où le flux de produit d'hydrogène d'export contient de 25 à 50% en moles d'hydrogène, de 15 à 35% en moles de vapeur et de 25 à 40% en moles d'azote.

12. Un procédé selon l'une quelconque des Revendications précédentes, où l'appareil utilisé pour récupérer le produit de dioxyde de carbone à l'opération (b) comprend une unité de réfrigération et un ou plusieurs des éléments suivants : un réfrigérant destiné à la condensation de la majeure partie de la vapeur d'eau présente, un équipement de collecte et d'élimination d'eau, des dispositifs de séchage destinés à sécher le gaz et un ou plusieurs échangeurs thermiques.

13. Un procédé selon l'une quelconque des Revendications précédentes dans lequel le dioxyde de carbone condensé est soumis à une opération de raffinage destinée à l'élimination de gaz dissous.

14. Un procédé selon l'une quelconque des Revendications précédentes où le produit d'hydrogène est séparé et éliminé du flux de gaz au moyen d'une unité de récupération d'hydrogène qui comprend une ou plusieurs unités sélectionnées parmi : une unité d'absorption modulée en pression et une unité de séparation à membrane.

15. Un procédé selon l'une quelconque des Revendications précédentes où le gaz d'hydrogène éliminé à l'opération (a) est divisé en deux flux, dont l'un est un flux de combustible d'hydrogène pour le SMR et l'autre est, ou constitue une partie de, un flux d'hydrogène d'export.

16. Un procédé selon l'une quelconque des Revendications précédentes, où le SMR comprend un nombre de tubes au travers desquels la chaleur pour la réaction de reformage endothermique est transférée principalement par convection.

17. Un procédé selon l'une quelconque des Revendications précédentes, où le procédé comprend en outre :
la récupération d'hydrogène complémentaire et/ou de dioxyde de carbone complémentaire suite à l'opération (b) au moyen d'une ou de plusieurs unités de séparation à membrane.

18. Un procédé selon la Revendication 17 où l'hydrogène et/ou le dioxyde de carbone complémentaire récupéré est recyclé par le mélange de ce gaz ou ces gaz avec : le flux de gaz reformé en amont de l'opération (a), ou
le flux de gaz en aval de l'opération (a) et en amont de l'opération (b).

19. Un procédé selon l'une quelconque des Revendications précédentes, où le flux de produits de combustion provenant du SMR est co-mélangé avec un flux d'hydrogène sensiblement pur ou un flux se composant essentiellement d'hydrogène et de vapeur d'eau de façon à produire un flux de produit d'hydrogène d'export.

20. Un procédé selon l'une quelconque des Revendications précédentes, grâce auquel de l'énergie est récupérée à partir du processus de production d'hydrogène et transmise au flux de produit d'hydrogène ou ses précurseurs par l'intermédiaire d'un échange thermique direct et/ou une vaporisation d'eau, la vapeur d'eau produite étant un constituant du flux de produit d'hydrogène.

21. Un procédé selon l'une quelconque des Revendications précédentes, grâce auquel le flux de produit d'hydrogène est exporté à une température supérieure à 120°C.

22. Un procédé selon la Revendication 21, grâce auquel le flux de produit d'hydrogène est exporté à une température supérieure à 210°C.

23. Un procédé selon l'une quelconque des Revendications précédentes, où un deuxième flux de produit d'hydrogène d'une pureté supérieure à 99% en moles est coproduit avec le flux d'hydrogène produit à l'opération (a), dans une proportion variable située entre 0 et 100% du taux de production d'hydrogène total.

24. Un procédé selon l'une quelconque des Revendications précédentes où la combustion du combustible dans le SMR est exécutée à une pression suffisamment élevée pour que le flux de produits de combustion puisse être co-mélangé avec le flux de produit d'hydrogène sans compression supplémentaire.

25. Un procédé selon l'une quelconque des Revendications précédentes où le milieu de combustion est de l'ai, de l'oxygène ou de l'air enrichi en oxygène.
